# EUROPEAN PATENT APPLICATION

(11) **EP 4 768 395 A2**
(43) Date of publication of application: **01.07.2026**
(21) Application number: 25227510.2
(22) Date of filing: 29.12.2025
(51) Int. Cl.: B64F 1/36, B64F 1/30, B60Q 1/24, F21V 33/00

(54) **A MEANS OF ILLUMINATING SAFE ZONE BOUNDARIES FOR FOOT TRAFFIC**

(30) Priority: 30.12.2024 GB 202419146; 09.12.2025 GB 202521206
(71) Applicant: P P S Commercials Limited, Bury, Greater Manchester BL9 8RD (GB)
(72) Inventor: Bullough, Adam, Bury, BL9 8RD (GB)
(74) Representative: Meissner Bolte UK

(57) **Abstract**

There is disclosed herein a method of illuminating one or more boundaries for defining a safe zone in the vicinity of an aviation environment, wherein the method comprises the steps of placing a light source adjacent to the aviation environment, illuminating a first boundary line that delineates the boundary between a safe zone and a risk zone adjacent the aviation environment. There is further disclosed a portable lighting device, for example for performing this method, and there is further disclosed an illuminating rope, belt or ribbon that may comprise a portion of the portable lighting device.

## Description

### Technical Field

The present invention is in the field of projection devices and methods thereof. In particular, the present invention is in the field of projection devices and methods for safety applications. More particularly, the present inventions is in the field of projection devices for delineating boundaries for safe zones in aviation environments.

### Background

Cordoning off out-of-bound areas with physical barriers such as signboards, bollards and tape is a common practice to prevent, or heavily reduce, foot traffic in hazardous locations. Although this practice has applications in a number of different industries, the aviation industry is one that particularly relies on these physical barriers to strictly control human movement in locations with an elevated risk of injury.

The shortcomings of such physical barriers in achieving such control in the aviation industry are particular prevalent in dark or low light environments, which often sees the barriers themselves becoming trip hazards (as they are often placed at the intersection of allowable and out-of-bound areas). This not only goes against the original motivation to implement such barriers but also may further compound the dangers in such environments by tripping a person into a danger zone.

Furthermore, the effective use of physical barriers relies on external light sources to adequately illuminate them. Such illuminating arrangement also often requires many light sources working in tandem and therefore posing a challenge for engineers/technicians to position such light sources so that they are able to illuminate the physical barriers with the required intensity.

As such, the assembling of an arrangement of barriers lining a no-go area, of which there may be many in an aviation environment, and the lights to illuminate them, is a considerable time investment. As such, many time constraint aviation authorities may often overlook such safety measures.

One such application where the above shortcomings are at high odds of occurring is when air passengers board or exit an aircraft. Here, bollards and ropes are placed to cordon off regions in the vicinity of the aircraft engine so as to prevent passengers getting too close to the hazardous engines when in the vicinity of the aircraft. Safety is important in such environments as the potential consequences of foot traffic being in the vicinity of hazards such as a jet engine can be very serious. In 2024 a person was sucked into a jet engine at Schiphol airport in Amsterdam and subsequently died.

Poorly placed or poorly illuminated physical barriers in such context may result in a more critical outcome than if the barriers were not present in the first place as a person tripped into a loss of balance is more prone to serious injury than one who has merely stepped foot in this vicinity. In low light environments not only are such bollards hard to see by the boarding/exiting air passengers (and hence a trip hazard), but are also hard to position accurately by aviation ground staff. This double source of failure further compounding the potential risk to air passengers.

Other areas within the aviation industry that may experience similar difficulties with barrier visibility, placement and trip risk relate to warehouse environments in the vicinity of heavy machinery.

There is yet to be disclosed a means for aviation safety applications that provides the visual cue benefits achieved by physical barriers but in a manner that does not result in it being a trip hazard. There is also a need for such means to be easily seen in all types of light environments, and one that is time efficient to set up.

The present invention addresses at least some of these aspects.

### Statements of Invention

Aspects of the inventions are set out in the independent claims. Optional features are set out in the dependant claims.

In accordance with a first aspect of invention, there is disclose a method of illuminating one or more boundaries for defining a safe zone in the vicinity of an aviation environment, wherein the method comprises the steps of:
placing a light source adjacent to the aviation environment;
illuminating a first boundary line that delineates the boundary between a safe zone and a risk zone adjacent the aviation environment. Said methodology may be particularly advantageous in that it provides a visual cue in the boundary line as to the exact location of the limit of the safe zone. The visual cue provided by this methodology may be particularly effective across a large range of light environments, and especially in low light level environments. Said methodology also does not rely on external light sources for the barriers to be seen and provides a visual cue that is self-contained in and of itself.

Optionally, wherein the method comprises illuminating the first boundary line with an illuminating rope. Said roped arrangement may enable an efficient deployment and removal of an illuminating means for changing aviation environments. A self-contained illuminating rope may ensure all portions of the rope are visible without the need for external light sources and hence improve visibility.

Optionally, wherein the illuminating rope comprises a flange portion, wherein the method further comprises delineating the first boundary line at partially by the flange portion. The flanged portion may further aid visibility by virtue of increasing the surface area that can be seen. This may be particular effective in high light level environments where illumination alone may not aid visibility.

Optionally, wherein the light source is placed such that it is positioned to illuminate a portion of the ground adjacent the aviation environment, and wherein the first boundary line is a distinct projection on the ground. Said methodology may be particularly advantageous in that it provides a visual cue in the boundary line as to the exact location of the limit of the safe zone. Said methodology may do this without introducing any trip hazards that may otherwise be introduced with physical objects/barriers placed in the vicinity of this boundary. The visual cue provided by this methodology may be particularly effective across a large range of light environments, and especially in low light level environments. Said methodology also does not rely on external light sources for the barriers to be seen and provides a visual cue that is self-contained in and of itself.

Optionally, wherein the method is for defining a safe zone for air passengers boarding and/or exiting an aircraft, and wherein the aviation environment is an area adjacent an aircraft. Advantageously, this may significantly reduce the foot traffic in the vicinity of an aircraft considered to be a risk or danger zone.

Optionally, wherein the method comprises the step of illuminating the first boundary line with a maximal intensity, and wherein the method comprises the step of illuminating the safe zone and the risk zone with a minimal intensity, wherein the difference between the maximal and minimal intensities projects a geometrically distinct line on the ground. Advantageously, this distinct formation of a boundary line may outline the precise location of both the safe and risk zones. This accuracy may enable the maximum utilisation of the space within the safe zone.

Optionally, wherein the method comprises the step of illuminating the first boundary line and the safe zone with a maximal intensity and wherein the method comprises the step of illuminating the risk zone with a minimal intensity, wherein the difference between the maximal and minimal intensities projects a geometrically distinct passage on the ground, wherein the illumination of the safe zone and the first boundary line is continuous. Advantageously, said arrangement provides an illuminated passage. Said illuminated passage may be preferred over a defined boundary line in some scenarios and more clearly communicates a safe zone.

Optionally, wherein the maximal intensity comprises a spectrum of illumination intensities. Said range may allow a balance to be struck between effective illumination and power saving across a large range of light environments.

Optionally, wherein the strength of illumination of the maximal intensity is at least 800 lumen and is preferably at least 1000 lumen. This may advantageously allow the method to be effective across a large range of light environments.

Optionally, wherein the maximal strength of illumination is at least 800 lumen and preferably 1000 lumen or more. This may be an effective "all-rounder" value that is visible across most light environments.

Optionally, wherein the method comprises illuminating the first boundary line with 60-80% percent of the maximum power of the light source, and preferably with 70%. This may effectively be used to create a distinct boundary line from dusk until dawn - and optionally with some visibility in daylight.

Optionally, wherein the method comprises the step of illuminating the safe zone with less than 5% percent of the maximum power of the light source. This may illuminate a safe zone and encourage traffic onto it. Illuminating the safe zone may further illuminate any trip hazards for a person walking on the safe zone.

Optionally, wherein the method comprises illuminating the risk zone with less than five percent of the power emitted from the light source. Advantageously, this may limit excessive light leaking into the risk zone and blurring this boundary.

Optionally, wherein the method comprises illuminating the risk zone with less than 1 percent of the power emitted from the light source. This advantageously enables a clear distinction between the boundary and the risk zone by forming a contrast between their illumination. This may enable this boundary to be clearer and not confuse a pedestrian as to its limits or thickness.

Optionally, wherein the method comprises illuminating the safe zone with less than five percent of the power emitted from the light source.

Optionally, wherein the method comprises illuminating the safe zone with less than 1 percent of the power emitted from the light source. The method steps of the above two statements advantageously enable a clear distinction between the boundary line and the safe zone by forming a contrast between their illuminations. This may enable this boundary to be clearer and not confuse a pedestrian as to its limits or thickness.

Optionally, wherein the risk zone is a region adjacent a first engine of the aircraft.

Optionally, wherein the risk zone is a region fore of the first engine of the aircraft.

Optionally, wherein the risk zone is aft of the first engine of the aircraft. The above three statements may denote particularly effective locations to place the illuminated boundary line to minimise the chance of safety incidents occurring.

Optionally, wherein the method comprises illuminating a second boundary line, wherein the second boundary line is a distinct projection on the ground, wherein the second boundary line forms a passageway together with the illuminated first boundary line.

Optionally, wherein this illuminated passageway defines a walkway that directs air passengers towards or away from the aircraft. The above two statements may form a clearer traffic controlling arrangement for air passengers that is constrained on both sides. Said arrangement may further illuminate any other non-apparatus related obstacles on the passenger intended passageway (should the internal space between the two boundary lines be illuminated too) and therefore serving as a further safety measure.

Optionally, wherein the second boundary line diverges from the first boundary line. This may enable a wider area coverage. As such, the illumination source may be situated at a first central location between the two boundary lines and define a passageway that is much wider than its own width. Alternatively, diverging lines may aid to control human movement from different angles of approach towards the aircraft (i.e. not limited to merely an orthogonal passageway towards the aircraft).

Optionally, wherein the method further comprises illuminating a third boundary line on the ground, wherein the third boundary line is a distinct projection on the ground, wherein the third boundary line is illuminated in the shape of an arc. Said versatility in defining the shape of the projected boundary lines may enable it to closer line risk zones of complex shape and maximise the area of the safe zone. Alternatively, said third boundary line may in some applications be used to outline the location of the illuminating means itself (portable projector) and prevent it becoming a trip hazard.

Optionally, wherein the open end of the arc is adjacent the first and second boundary lines. Advantageously, the shaped from such arrangement may be particularly suited to defining a safe zone in some applications.

Optionally, wherein the method comprises illuminating the first boundary line in straight lines.

Optionally wherein the method comprises illuminating the second boundary line in straight lines. Advantageously, the above two statements may form the most efficient means of lining/cordoning off a risk zone. The above two statements may also form a uniform passageway in-between the two boundary lines that is easy to follow.

Optionally, wherein the method comprises illuminating the first boundary line in curved lines.

Optionally wherein the method comprises illuminating the second boundary line in curved lines. The above two statements may be suitable for some scenarios where the safe zone is maximised with the implementation of curved lines, for example, where a risk zone is curved. Curved lines may also be employed to better avoid certain obstacles.

Optionally, wherein the method comprises illuminating the first boundary line with both straight and curved lines, wherein this combination of straight and curved lines follows the architecture of an aircraft. This may advantageously outline the most effective arrangement of outlining the safe and risk zones in environments comprising mixed geometries.

Optionally, wherein the method comprises the step of placing the light source in front of an aircraft. This arrangement may be effective in environments where lateral space is limited or where winds are particularly strong in a sideways direction to the aircraft. This location may also provide a neutral location that is applicable to a repeating number of aircrafts parked in the same place and hence reduce the need to move the light source between aircrafts.

Optionally, wherein the method comprises the step of placing the light source above an aircraft. This arrangement may be effective in environments where space in the vicinity of the aircraft is limited. This location may also provide a neutral location that is applicable to a repeating number of aircrafts parked in the same place and hence reduce the need to move the light source between aircrafts.

Optionally, wherein the method comprises the step of placing the light source at ground level. This may produce the most intensely illuminated and hence easily visible projection/illumination of the boundary lines onto the ground. This arrangement may also allow for ease of portability of the light source by a single person.

Optionally, wherein the method comprises the step of placing the light source on an aircraft. This may be operable by a person on the aircraft and prevent the need for multiple persons on the ground. This may be useful in emergency situations or where on ground facilities are limited, for example, when in under equipped airports.

Optionally, wherein the method comprises the step of illuminating the ground with a range of illumination of 15-30m, and most preferably from 20-25m. This may be advantageous in placing a light source at a suitable distance from where the safe zone is to be defined to as to prevent the light source itself forming a trip hazard.

Optionally, wherein the method comprises the step of illuminating with a projector.

Optionally wherein the projector emits light from a LED light source, such as an LED chip.

Optionally wherein the projector emits light from a laser light source.

The above three statements may provide an effective illumination means across a range of intensities, provide flexibility in their illuminated shape and be light enough to be portable.

Optionally, wherein the method comprises the step of illuminating with a portable light source. This manoeuvrability may enable a person to locate the boundary (and place a boundary line) in a precise location to maximise the safe zone area.

Optionally, wherein the method of placing the portable light source to illuminate the first boundary line comprises the step of transporting/adjusting the light source on wheels. Said wheels may enable effective manoeuvrability on airport runways/ terrain. This manoeuvrability may enable a person to locate the boundary (and place a boundary line) in a precise location to maximise the safe zone area.

Optionally, wherein the method further comprises illuminating a portion of the boarding stairs of an aircraft. This may ensure the boarding stairs are visible. This may also indicate to air passengers boarding an aircraft to follow the boundary line to their target.

Optionally, wherein the method comprises illuminating a first risk zone in the vicinity of the engine that is affected by the heat of the engines.

Optionally, wherein the first boundary line is spaced from an aircraft engine by at least 20m dependent on the aircraft. This may be an adequate distance for passengers to not be exposed to excessive heat from the aircraft engines.

Optionally, wherein higher risk zones are illuminated more intensely and lower risk zones are illuminated less intensely. This may indicate different levels of severity or risk associated with locations along the boundary line and do so instantly. Higher risk areas are more likely to catch the attention of air passengers and hence demand greater care. These mixtures of intensities may strike a balance between effective communication of danger zones to the passengers and power consumption by the light sources.

Optionally, the method comprising illuminating when a light sensor determines the ambient light is less than a pre-determined safety level, wherein said level approximates to the normal light level at dusk, for example around 400 lumens, or 250 lumens, or 100 lumens or 50 lumens.

Optionally, wherein the illuminating when the light sensor determines the ambient light is less than the pre-determined safety level comprises projecting the light on to the ground.

Optionally, wherein the illuminating when the light sensor determines the ambient light is less than the pre-determined safety level comprises illuminating an illuminating rope.

Optionally, wherein when the light sensor determines the ambient light is less than the pre-determined safety level preventing the light projector from being angled towards the sky, or otherwise away from the ground.

Optionally, wherein only allowing up to 10 degrees of angular movement of the projector, or optionally only 5 degrees of angular movement of the projector member.

In accordance with a second aspect of invention there is disclosed a portable projector for illuminating boundaries for defining safe zones in an aviation environment, wherein the portable projector comprises;
a first light source;
wherein the first light source is configured to illuminate a first boundary line on that ground, wherein the first boundary line is configured to delineate the boundary between a safe zone and a risk zone in the aviation environment. Said arrangement may be particularly advantageous in that it provides a visual cue in the boundary line, which outlines the exact location of the limit of the safe zone. Said arrangement may do this without introducing any trip hazards that may otherwise be introduced with physical objects/barriers placed in the vicinity of this boundary. The visual cue provided by the portable projector may be particularly effective across a large range of light intensities, and especially in low light level environments and need not rely on an external light source to be seen.

In this second aspect the portable projector may alternatively be known as a portable lighting device. There exist embodiments in which the illuminating rope is used as the lighting device, and in which a projector is not utilised.

Optionally, wherein the portable projector is for defining a safe zone for air passengers boarding and/or exiting an aircraft, and wherein the aviation environment is an area adjacent an aircraft. Advantageously, this may significantly reduce the foot traffic in the vicinity of an aircraft considered to be a risk or danger zone.

Optionally, the lighting means may comprise an illuminating rope, ribbon or belt. This may in accordance with the third aspect. This may provide a 24 hour solution such that the belt may be brightly coloured for visibility in the day, and then may be illuminated at night to provide night time visibility.

Optionally, when the portable lighting device further comprises one or more reels to store the illuminating rope, ribbon or belt, when the illuminating rope, ribbon or belt is not in use. This may be a space efficient way to reliably and repeatedly store the illuminated rope when not in use.

Optionally, the reels may be located on the body, or alternatively on a stand portion or arm portion. These may provide stability. The stand portion may be advantageous particularly such that the illuminating rope is held at an appropriate height.

Optionally, wherein the portable projector further comprises a propulsion means;
wherein the propulsions means is configured to align the first light emitting portion such that it is positioned to illuminate the first boundary line. Said propulsion means may enable effective manoeuvrability of the portable projector on airport runways/ terrain. This manoeuvrability may aid a person in locating the boundary line in a precise location to maximise the safe zone area.

Optionally, wherein the portable projector further comprises a second light source wherein the second light source is configured to illuminate a second boundary line on the ground. Advantageously, the two boundary lines may be used to delineate a safe zone between first and second sides of the portable projection in scenarios where the portable projector is placed in between two risk zones. Additionally, the first and second boundary lines as enabled by the present statement may be used to define a safe passageway, for example, for air passengers boarding and exiting and aircraft. This allows for a more controlled foot traffic arrangement than one which simply outlines a risk zone on one side.

Optionally, wherein the portable projector further comprises a stand portion. Advantageously, this may elevate the first and second light sources to an appropriate height so as to project the boundary lines with a high level of clarity and across a large ground distance. This distance reach, as enabled by the height may also aid in distancing the portable projector from the risk zone so as to reduce the number of trip hazards near the boundary lines.

Optionally, wherein the stand portion is a handle portion configured to be held by an operator for transporting/positioning the portable projector. This may be an optimum height to achieve a high- level of clarity in the projected boundary lines on the ground and provide convenience to a person manoeuvring the portable projector.

Optionally, wherein the first light source is positioned atop the stand portion.

Optionally, wherein the second light source is positioned atop the stand portion. Advantageously, the above two statements may result in an optimum height of the light sources to achieve a high-level of clarity in the projected boundary lines on the ground especially when balanced against the ground distance (range) that is likely to be covered in defining the safe zones.

Optionally, wherein first and second light sources are configured to face first and second directions respectively such that the first boundary line is illuminated adjacent a first side of the portable projector, and wherein the second boundary line is illuminated adjacent a second side of the portable projector.

Optionally wherein the first and second light sources face opposite directions to one another. The above two arrangements may enable the projection of first and second boundary lines on first and second sides of the portable projector. This may enable the illumination of a passageway to direct traffic or for delineating a safe zone between the two sides of the portable projector should the portable projector be placed in between two risk zones or vice versa.

Optionally, wherein the first and second boundary lines are parallel.

Optionally wherein a passageway is formed in between the first and second boundary lines for aircraft passengers. Said passageway may aid in guiding air passengers towards and away from aircraft boarding stairs or the like. This passageway may form the optimal arrangement in controlling foot traffic in the vicinity of an aircraft.

Optionally, wherein the first and second boundary lines are straight lines that diverge from one another. This may be useful in defining a passageway that covers a large ground area. This arrangement may also be useful for scenarios where the safe zone is increasingly larger from the light source location and the diverging lines may accurately represent this increasing safe zone area. Diverging lines may also better guide persons across a wider range of approach angles.

Optionally, wherein portable projector comprises a third light source, wherein the third light source is configured to illuminate a third boundary line on the ground.

Optionally, wherein the third light source faces a third direction, wherein the third direction is orthogonal to the first and second directions such that the third boundary line is adjacent a third side of the portable projector. The above two statements may provide a further means to delineate another safe zone and thus allow the portioning of the ground into multiple sections. This may be particularity useful for scenarios where there are multiple risk sources placed such that they are angularly separate from another.

Optionally, wherein the third boundary line is an arc shape.

Optionally wherein the open end of the arc faces and is adjacent the first and second boundary lines. The above two statements may allow for particular uses in scenarios where attention need be brought to the centre of the passageway created by the first and second boundary lines, particularly when they diverge. It may also provide uses in scenarios where the portable projector is placed adjacent a risk zone. Here, the first and second boundary lines may denote a safe zone passageway and the arc may denote the presence of the risk source or the truncation of the safe zone adjacent the risk source. The illuminated arc may also outline the location of the light source/ portable projector.

Optionally, wherein the portable projector comprise a projector body. Said body may advantageously support the various light sources and other elements of the portable projector.

Optionally, wherein the portable projector comprises a light sensor configured to determine the ambient level of light in the local vicinity. Optionally, wherein, the light sensor is configured to cause the portable projector to illuminate when the ambient light source drops below a pre-set level, for example the ambient light level at dusk, for example below 400 lumens, 250 lumens, 100 lumens or 50 lumens. Optionally, wherein the portable projector is configured to project light below this level, and//or wherein the portable projector is configured to illuminate an illuminating rope below this ambient level of light. Optionally, wherein the portable projector is configured to prevent the projector from being angled above the ground once the light sensor determines a level of light below the threshold. Optionally, wherein the projector comprises one or more arms housing the projecting element. Optionally, wherein the arms are fixed in position once ambient light below the predetermined level is detected. Optionally, wherein fixed comprises an angular movement of up to 5 degrees or up to 10 degrees.

Optionally, wherein the propulsion means are attached to the projector body.

Optionally, wherein the stand portion is attached to the projector body. The above two statements may combine to give a single unitary product. This may aid storage and deployment of the portable projector.

Optionally, wherein the stand portion is pivotably attached to the projector body.

Optionally, wherein in the stand portion is configured to be pivotable between a first non-collapsed configuration and a second collapsed configuration with respect to the projector body, wherein the non-collapsed configuration is an illuminating configuration for the portable projector and wherein the collapsed configuration is a storage configuration for the portable projector. The above two statements may ensure that the portable projector be easily deployed by a user and stored in a space efficient manner.

Optionally, wherein the projector body is configured to store one or more batteries used to operate the first light source. This may aid in reducing space that it utilised externally of the portable projector. It may also reduce trip hazards in the vicinity of the boundary lines by reducing the number of elements deployed on the ground.

Optionally, wherein the projector body is configured to store the first light source when not in use.

Optionally, wherein the projector body is configured to store the second light source when not in use.

Optionally, wherein the projector body is configured to store the third light source when not in use. Advantageously, the above three statements may provide a compact storage solution for the three light sources.

Optionally, wherein the stand portion is made from a plastic or other polymer or equivalent suitable material that can withstand heat and cold conditions. Advantageously, this material is has a sufficiently high strength to weight ratio so as to accommodate the light sources and withstand the forces due to transporting and manoeuvring the portable projector.

Optionally, wherein the projector body is made from aluminium such as die cast aluminium. Advantageously, this material is has a sufficiently high strength to weight ratio so as to withstand the weight of all the components of the portable projector. It may also be light enough to ease transporting and manoeuvring of the portable projector.

Optionally, wherein the propulsion means are wheels.

Optionally, wherein the first light source is a first projector.

Optionally, wherein the second light source is a second projector.

Optionally, wherein the third light source is a third projector. The above three statements may advantageously project the boundary lines onto the ground with high levels of definition and clarity so as to outline a distinct line.

Optionally, wherein the portable projector comprises a controller.

Optionally wherein the controller is configured to communicate with the first projector.

Optionally, wherein the controller is configured to communicate with the second projector.

Optionally, wherein the controller is configured to communicate with third projection. Advantageously, the above four statements may allow for an arrangement where all three light sources work in agreement to define a safe zone. This may allow for the light sources to illuminate the ground simultaneously and complement the lines projected by the other light sources so as to define the intended shapes and lengths of the boundary lines.

Optionally, wherein the controller is stored in the projector body. Advantageously, this may provide a secure storage solution for the controller away from water ingress and mechanical impact.

Optionally, wherein the portable projector is configured to emit LED light. The above statement may provide an effective illumination means across a range of light intensities, provide flexibility in the shape of boundary lines they illuminate and be light enough to be portable.

Optionally, wherein the projector is configured to emit lasers. This may enable a more distinct projection of boundary lines onto the ground and be of higher range than other sources.

Optionally, wherein the portable projector comprises a harnessing means, wherein the harnessing means is configured to attach onto a component of the aircraft. This may allow the portable projector to illuminate the boundary lines from on-board the aircraft. This may be particularly useful in locations/ airports where on ground facilities are limited.

In accordance with a third aspect of invention, there is disclosed an illuminating rope for illuminating boundaries for defining safe zones in an aviation environment, wherein the illuminated rope comprises:
one or more light emitting elements, wherein the one or more light emitting sources are configured to illuminate at least a portion of the length of the illuminating rope. This may provide an effective illuminating arrangement in low light environments without the need for external light sources. Said roped arrangement may enable an efficient deployment and removal of an illuminating means for changing aviation environments. A self-contained illuminating rope may ensure all portions of the rope are visible without the need for external light sources and hence improve visibility.

Optionally, wherein the illuminating rope further comprises a flange portion, wherein the flange portion extends a portion of the longitudinal length of the illuminating rope. This may advantageously provide an effective first boundary line that accurately delineates safe and risk zones. The flanged portion may further aid visibility by virtue of increasing the surface area that can be seen. This may be particular effective in high light level environments where illumination alone may not aid visibility. Therefore, an effective illuminating arrangement may be effected in both day and night.

Optionally, wherein the flange portion is flexible.

Optionally wherein the flange portion is configured to at least partially wound around the illuminating rope. The above two statements may maintain the effective deployment and removal of the illuminated rope and enable the flange portion to be wound with the rope.

Optionally wherein the illuminating rope is flexible.

Optionally wherein the illuminating rope is configured to be wound. The above two statements may enable efficient deployment and removal for changing aviation environments.

Optionally, wherein the illuminating rope is configured to be wound.

Optionally wherein the winding of the flanged portion around the illuminating rope is perpendicular to the winding of the illuminating rope around itself or a spool. The above two statements may give rise to a compact and convenient to achieve winding arrangement for storage ease.

Optionally, wherein the illuminating rope further comprises a main cylindrical body.

Optionally wherein the main cylindrical body is substantially tubular.

Optionally, wherein the flange portion is located such that the flange portion's plane bisects the cross section of the main cylindrical body of the illuminating rope. This may enable a dual direction winding arrangement for the flange portion around the illuminating rope.

Optionally, wherein the flange portion is attached tangentially with respect to the cross section of the main cylindrical body of the illuminating means. This may encourage a tighter winding arrangement around the main cylindrical body of the illuminating rope.

Optionally, wherein the illuminating rope comprises one or more helically wound elongate members, wherein one or more of said members comprises a light emitting element. Optionally, wherein said one or more helically wound members are wound around a core.

Optionally, wherein the helically wound members enable the illuminating rope to wound as per a normal rope.

Optionally, the illuminating rope, ribbon or belt comprises a covering portion configured to cover the one or more light emitting elements, such that the one or more light emitting elements are housed between the illuminating rope, ribbon or belt and the covering portion. This may be highly advantageous, especially in embodiments in which the covering portion is translucent. This may allow the connection between the light emitting element and the illuminating rope to be protected, and therefore the lifespan of the illuminating rope to be increased, whilst also improving the efficiency at which the illuminating rope can be stowed, for example in a reel.

Optionally, the covering portion is stitched, adhered, or heat sealed to the illuminating rope, ribbon or belt. This may allow the covering portion to be securely attached, and for the manufacturing process to be simple, minimising tooling and set-up costs of manufacture.

Optionally, the illuminating rope, ribbon or belt, further comprising an attachment mechanism to connect to a second illuminating rope, ribbon or belt, wherein the attachment mechanism comprises a male/female connector such as a hook portion. This may enable chains of illuminating ropes to be combined therefore allowing any arrangement and distance to be covered.

Optionally, the illuminating rope, ribbon or belt comprises nylon, and/or wherein it is 50mm-100mm in with, optionally 75mm in width, and wherein the illuminating rope, ribbon or belt is 10m to 50m in length, optionally 15m, 25m, 35m or 45m in length. This may mean it can be produced in a similar manner to belts for queues and the likes and therefore mean existing supply chains can be re-purposed - again reducing tooling cost for manufacture.

In the above third aspect the illuminating rope may be known as a rope, ribbon or belt. These terms are interchangeable.

In accordance with a fourth aspect of invention, there is disclosed a kit of parts comprising;
an aircraft;
a portable projector; and
an airport.

Optionally, wherein the portable projector is the portable projector of the second aspect.

In accordance with a fifth aspect of invention, there is disclosed a kit of parts comprising;
an aircraft;
an illuminating rope; and
an airport.

Optionally, wherein the illuminating rope is the illuminating rope of the third aspect.

### Brief Description of Figures

Figure 1 shows a flowchart of a method of illuminating one or more boundaries for defining a safe zone in the vicinity of an aviation environment.
Figure 2 shows a first illumination arrangement in the vicinity of an aircraft comprising a first boundary line to delineate a safe zone and a risk zone.
Figure 3 shows the first illumination arrangement of Figure 2 and possible locations of the light source used to achieve it.
Figure 4 shows a second illumination arrangement in the vicinity of an aircraft comprising a first boundary line to delineate a safe zone and a risk zone and wherein the safe zone is illuminated too.
Figure 5 shows a third illumination arrangement in the vicinity of an aircraft comprising first and second boundary lines to define a passageway towards/away from an aircraft.
Figure 6 shows a fourth illumination arrangement in the vicinity of an aircraft comprising first and second boundary lines that diverge from one another.
Figure 7 provides a fifth illumination arrangement in the vicinity of an aircraft comprising first and second boundary lines to define a passageway towards/away from an aircraft, and wherein the boundary lines are curved.
Figure 8 shows a first embodiment of a portable projector used to illuminate the arrangement of Figure 6.
Figure 9 shows a second embodiment of the portable projector.
Figure 10a shows side view of a third embodiment of the portable projector in its non-collapsed configuration.
Figure 10b shows a front on view of the portable projector seen in Figure 10a.
Figure 11a shows a side on view of the portable projector of Figure 10a in its collapsed configuration.
Figure 11b shows a front on view of the portable projector seen in Figure 11a.
Figure 12 shows a perspective view of a first embodiment of an illuminating rope.
Figure 13 shows a perspective view of a second embodiment of an illuminating rope comprising a flange portion.
Figure 14a shows a cross sectional view of the illuminating rope of Figure 13.
Figure 14b shows a cross sectional view of a third embodiment of the illuminating rope, comprising a flange portion attached tangentially to the illuminating rope.
Figure 15 shows an alternative embodiment of an illuminating rope comprising one or more helically wound elongate members configured to emit light.
Figure 16a shows one embodiment of a "hose-type" reel for storing the illuminating rope during periods of non-use. This is shown in both side view and front view. This may be mounted on the portable projector such as on the base of the portable projector, on the upright, or on an additional arm arrangement.
Figure 16b shows one embodiment of a "ribbon-type" reel for storing the illuminating rope during periods of non-use. This is shown in cross-sectional view. This may be mounted on the portable projector such as on the base of the portable projector, on the upright, or on an additional arm arrangement.
Figure 17a shows a cross-sectional view of a further embodiment of an illuminating rope in a ribbon type embodiment with an illuminating element attached to a ribbon/rope element.
Figure 17b shows a cross-sectional view of a further embodiment of an illuminating rope in a ribbon type embodiment with an illuminating element attached to a ribbon/rope element. Affixed to the illuminating rope is a covering sheet.
Figure 17c shows a cross-sectional view of a further embodiment of an illuminating rope in a ribbon type embodiment with an illuminating element attached to a ribbon/rope element. Affixed to the illuminating rope is a covering sheet, or alternatively a portion of the ribbon may fold over the illuminating element.

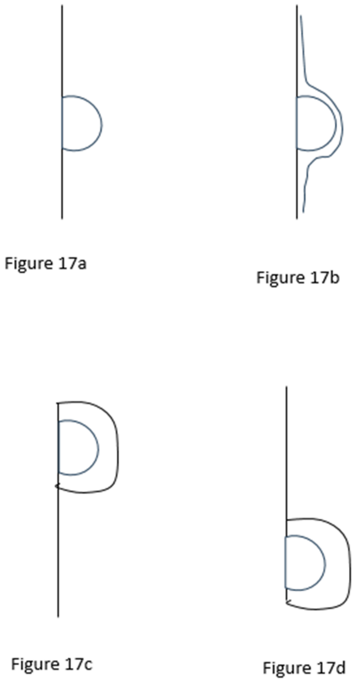

Figure 17c shows a cross-sectional view of a further embodiment of an illuminating rope in a ribbon type embodiment with an illuminating element attached to a ribbon/rope element. Affixed to the illuminating rope is a covering sheet, or alternatively a portion of the ribbon may fold over the illuminating element.

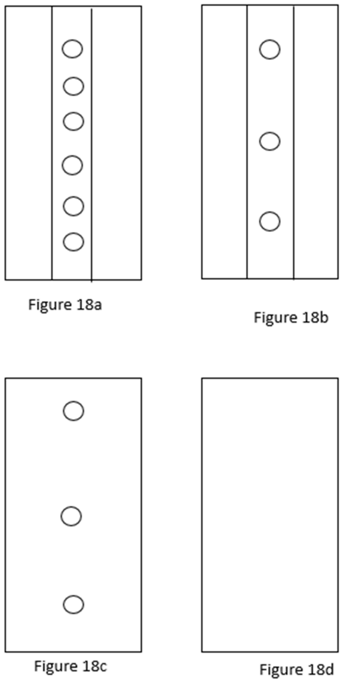

Figure 18a shows a plan view of a non-covered embodiment of a ribbon type embodiment in which the illuminating elements are in the form of an illuminating strip. In this embodiment the illuminating elements are spaced tightly together.
Figure 18b shows a plan view of a non-covered embodiment of a ribbon type embodiment in which the illuminating elements are in the form of an illuminating strip. In this embodiment the illuminating elements are spaced sparsely such that they are apart from one another.
Figure 18c shows a plan view of a non-covered embodiment of a ribbon type embodiment in which the illuminating elements are independent of one another. In this embodiment the illuminating elements are spaced sparsely such that they are apart from one another.
Figure 18d shows a plan view of a covered embodiment of a ribbon type embodiment in which the covering element is visible.

### Detailed Description

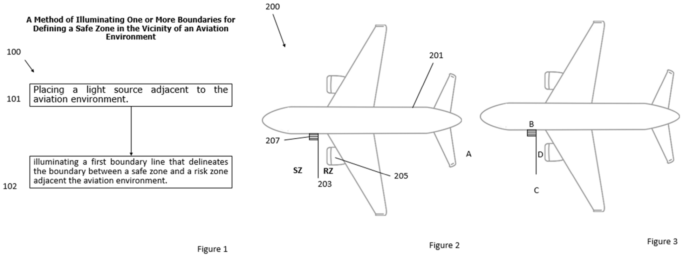

Figure 1 shows a flowchart 100 of a method of illuminating one or more boundaries for defining a safe zone in the vicinity of an aviation environment, wherein the method comprises the steps of: placing a light source adjacent to the aviation environment; illuminating a first boundary line that delineates the boundary between a safe zone and a risk zone adjacent the aviation environment.

It is noted that the terms portable projector and portable lighting device may be used interchangeably. Moreover, the terms illuminating rope, illuminating belt and illuminating ribbon may also be used interchangeably. Lighting element, illuminating device, and illuminating element may also be used interchangeably throughout.

There are two main ways in which this methodology may be executed. These are explored below. A first implementation of the methodology 100 relates to placing a light source such that it is positioned to illuminate a portion of the ground adjacent the aviation environment and illuminating a first boundary line on the ground that delineates the boundary between a safe zone and a risk zone in the aviation environment, wherein the first boundary line is a distinct projection on the ground. This is described in detail first. A second implementation relates to executing methodology 100 through the use of an illuminating rope. Both of these implementations are complimentary to one another and hence may be implemented simultaneously and in conjunction. Additionally, each implementation is capable of being executed independently of one another. This is described later in this description.

With respect to the first implementation, the boundaries referred to in Figure 1 relate to the partitioning of the ground itself, with visual cues provided in the form of light projections. These cues are explicitly at ground level and not raised some height from ground level as normally found with a bollard or tape arrangement. Step 101 executes such illumination of the ground at specific locations that define and separate the safe zone and risk zones with a boundary. By virtue of this ground level illumination, there is no trip hazard introduced in the vicinity of the risk zone.

The safe zone as described above and henceforth refers to an area which is deemed safe for foot traffic, whereas a risk zone is an area that poses a risk of injury to a human and hence is to be avoided. In particular, the risk zone may refer to areas that are proximal to sources of danger. In Figures 2-7, this danger source is a wing mounted aircraft engine, which produces both heat and suction, and the risk zone is the immediate vicinity around (aft and fore) of the engine. However, in other aviation environments, or in other fields altogether, the risk zone may refer to any area where there is a risk of human injury through any means not explicitly cited herein. An aviation environment may encompass airports, and engineering areas related to aircraft. In other applications, the risk zone may also refer to areas that do not pose a risk but may aim to reduce foot traffic for motivations such as confidentiality or privacy.

The boundaries as described in Figure 1 take the form of ground projected boundary lines. The boundary lines projected in step 102 are distinct projections on the ground with an explicit form and distinguishable geometry from the surrounding portions of the ground adjacent the boundary. Such distinct projections clearly outline the boundary between safe and risk zones with a high degree of definition and with minimal bleeding from either side of the boundary line into the safe and risk zones. This accurately defines the area suitable for foot traffic and maximises the space available for it by virtue of minimising the blurred regions which may thicken the boundary line's appearance and confuse passengers into avoiding a larger area than needed. Other embodiments may simply aim to illuminate this boundary to indicate its presence rather than explicitly outlining its exact form i.e. merely provide a rough indication of the risk zone rather than accurately defining the boundary line.

Although described in this specification with a particular focus in the aviation industry, the method of Figure 1 is applicable to a number of additional and differing fields. The method of Figure 1 is employable in any scenario requiring the cordoning off of specific locations through non-obstructing means (illuminated boundary line projections). The aviation industry particularly benefits from the methodology described herein due to the demands of balancing available floor space for foot traffic with safety of persons near heavy machinery or other mechanical dangers. Furthermore, the term aviation environment used in Figure 1 is inclusive of a number of scenarios found within the aviation industry and need not relate exclusively to the immediate vicinity of the aircraft 201 as seen in Figures 2-7. For example, the method of Figure 1 may have uses in aviation warehouses, where risk zones near heavy machinery may be cordoned off.

Figure 2 shows an exemplary illumination arrangement 200 of implementing the first boundary line 203 of the method of Figure 1 to define a safe-risk zone boundary fore of an aircraft engine 205. Said first boundary line 203 maintains a safe distance from the aircraft engine 205 as it extends towards the boarding stairs 207 of the aircraft 201 (it may also illuminate a portion of the boarding stairs 207 for easier visibility). This arrangement allows air passengers (not shown) to safely board or exit the aircraft 201 by ensuring they are a safe distance from the engines 205. Here, left of the boundary line is the safe zone SZ and right of the line is a risk zone ZR. Although only one boundary line 203 is seen in Figure 2, each gate of the aircraft 201 may comprise a boundary line 203 extending towards it and separated a safe distance from the engine 205 or other hazardous portion of the aircraft 201. In some instances, for example for the front and/or rear steps of an Airbus A380 this may be 42m. This may be either fore or aft of the engine 205.

The first boundary line of Figure 2 is to be illuminated with a maximal intensity whilst the safe SZ and risk zone RZ portions of the ground are not to be illuminated, or illuminated with a minimal intensity (i.e. the illumination is such that there is minimal bleeding of light into the risk RZ or safe zones SZ). As such, maximal intensity is better be understood as the light intensity of the projected first boundary line 203 (when actively projected onto the ground) and not necessarily, a direct reference to the maximum brightness the light source (not shown here) is capable of projecting.

The discrepancy in illumination between the maximal and minimal intensities defines a clear and distinct projection on the ground which highlights the limits of the safe zone SZ to an air passenger more readily and in an attention capturing manner. This high resolution projection defines the limits of the safe zone SZ more accurately to maximise ground space for foot traffic as described above.

The maximal intensity of the first boundary line 203 comprises a value from a spectrum of illumination intensities. The entire first boundary line 203 may be illuminated with a single intensity/strength of illumination that is selected to achieve the desired eye catching characteristics when balanced with the external light environment. For example, a dark or low light environment need not a high intensity of illumination to be sufficiently visible to the air passenger. Whereas as a bright or high light environment may require a higher light intensity. Calibrating the light intensity to the external environment may allow for power saving (by reducing the excess and unnecessary light intensities when not needed) as well as reducing eyestrains of having high light intensities in low light environments. In aviation warehouse settings (not shown), the light environment is likely to be of a high light level, as such the maximal intensity of the first boundary line 203 when employed in such application may be a high value.

Additionally, in some embodiments (not seen in Figure 2) the freedom of selecting from a spectrum of light intensities may allow different portions of the first boundary line 203 to be illuminated with different intensities. This may be a useful step in communicating the severity of the dangers at different portions along the first boundary line 203. For example, the portion of the first boundary line 203 adjacent the engine 205 may be more intensely illuminated in comparison to the portion of the first boundary line 203 adjacent the boarding stairs 207 or wing tip. The higher intensity indicating a greater risk than the lower intensity of illumination.

The range of the spectrum of the strength of illumination in the application of Figures 2-7 may be from 800 lumen to 1200 lumen, and more preferably 1000 lumen. In the particular embodiment of Figure 2 it may be at a maximal intensity of 1000 lumen. As said value balances effectiveness across a large range of external light levels with power efficiency. This value may be 70% of the maximum power of the light source (not shown).

The risk RZ and safe zones SZ in Figure 2 are not shown to be illuminated. However, in other embodiments these areas may be illuminated with less than 1% of the maximum power of the light source (not shown). This may simply be due to the bleeding of light from the first boundary line 203 into the safe SZ and risk zones RZ respectively. In other embodiments, dependant on light sources and particularly with higher illumination intensities and discrepancies in terrain, this bleeding may be higher. For such scenarios, said areas may be illuminated with less than 5% of the maximum power of the light source.

To achieve the illumination arrangement of Figure 2, the light source may be placed at a number of locations with respect to the aircraft. These various locations are shown in Figure 3. A first of these locations (labelled A in Figure 3) may be in front of the aircraft 201 and at a height that comfortably clears the height of air passengers with the projection angle so as to project the first boundary line 203 in the intended location without interference/ obstruction from the body of said passengers. This may include locating the light source on a building (now shown) proximal to the aircraft 201, such as an aircraft hanger or an airport building overlooking the aircraft.

A second location (not labelled in Figure 3) of the light source may be directly above the aircraft 201, for example suspended from an aircraft hanger or airport building.

The light source may also be positioned on the aircraft (labelled B in Figure 3). This may be at a location specifically overlooking the boarding stairs 207, for example suspended above the door of the aircraft 201. This may be particularly useful for environments where ground facilities are limited. The light source may in such scenarios be kept or stored on board the aircraft 201.

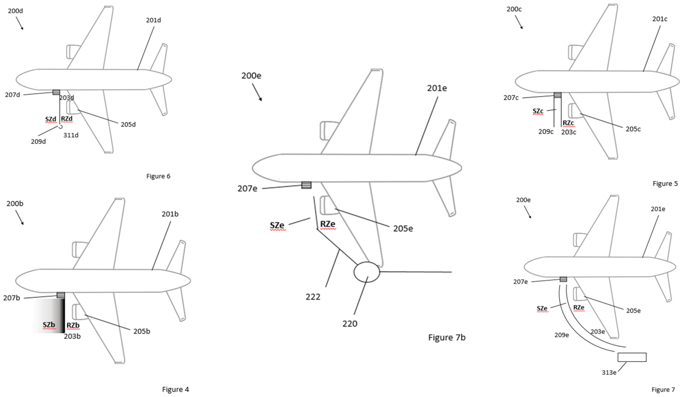

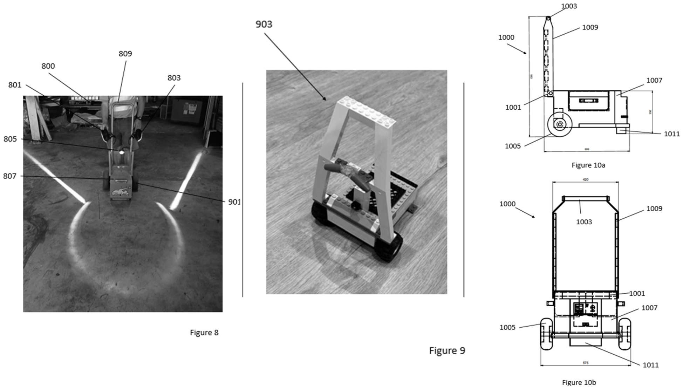

The light source (not shown) may also be placed at ground level adjacent the aircraft (labelled as C in Figure 3). This may be the most common location of the light source to achieve the arrangement of Figure 2. This location is a convenient place to situate the light source and can be adjusted by on ground personnel easily. The light source here may be distanced adequately from the area intended for foot traffic so as to not introduce an obstacle in the vicinity of the traffic or boundary edge. The light source may be angled and elevated such that it illuminates the ground with a range of up to 30m for this reason. The area immediately adjacent the light source may also be illuminated with an additional boundary line (not shown) so as to highlight the location of the light source and prevent any risk of tripping hazard (concept shown in Figure 6). The light source used for this application may be a portable light source as described in Figures 8 and 9. Position C in Figure 3 denotes a light position longitudinally aligned with the boundary line 203. However, this relationship between light source position and boundary line need not be required in other embodiments. It is entirely possible in other embodiments for ground positioned light sources to be placed transversely (or other angle) with respect to the projected boundary line 203, for example at position D or other location not vertically aligned with the boundary line. This discrepancy in light source position is enabled by a large degree of freedom in light source orientation as permitted by the portable projector of Figures 8 and 9.

The light source used to project the first boundary line may be a projector that emits light from any of a LED source or a laser source. Other embodiments may use other sources that are capable of projecting distinct lines onto the ground.

Figure 4 shows an alternative illumination arrangement 200b where in addition to the first boundary line 203b seen in Figure 2, a portion of the safe zone SZb is also illuminated with a maximal intensity. The effect of this arrangement is that a passage is illuminated by virtue of the projection which may guide foot traffic towards or away from the boarding stairs 207b. This may be a more advantageous arrangement than merely projecting a first boundary line 203 as the illuminated passage may highlight any obstacles on the guided passage that were previously not visible. The illumination of the safe zone SZb may be a continuum from that of the first boundary line 203b utilising the same intensity of illumination described above. Alternatively, the safe zone SZb may be illuminated to a lesser extent (in terms of intensity) than the fixed boundary line 203b so as to still provide a clear and distinct cut off with the boundary line 203b. The illumination of the safe zone SZb may be a result of illumination from a separate light source to that of the first boundary line 203b. The embodiment seen in Figure 4 shows the illuminated passage fade to a lower intensity in portions away from the boundary line. The light source may be positioned at ground level for this arrangement at location D as described above in Figure 3.

The risk zone RZb in this illumination arrangement may once again be illuminated with a minimal intensity or none at all. In an alternative form of said arrangement and although not seen, the risk zone RZb may be illuminated from the first boundary line 203b with a maximal intensity and the safe zone SZb illuminated with a minimal intensity. This may define the out of bounds areas instead of the guided passage and serve as a notice of the danger zone as opposed to a passage to be walked on.

In combination with the first boundary line executed by the methodology of Figure 1, Figure 5 shows the further illumination of a second boundary line 209c that is parallel with the first boundary line 203c. The first 203c and second boundary 209c lines together defining a clear passageway (labelled as a safe zone SZc). This illuminated passageway serving to act as a walkway to the boarding stairs 207c. The second boundary line 209c being of the same form and intensity in this Figure as the first boundary line 203 (described in Figure 2). In alternative embodiments these lines 203c, 209c may be of different intensities. The centre portion of the passageway SZc formed by the first 203c and second 209c boundary lines may be illuminated (with a maximal intensity) such as that described in Figure 3 or it may be left vacant. This first 203c and second 209c boundary line arrangement may employ a light source for each line to be projected. However, as will be described later, these light sources may be a part of a unitary apparatus. The location of such light sources may be as that described in Figure 3.

Figure 6 shows an alternative illumination arrangement 200d of two boundary lines, the second boundary line 209d in this instance diverging from the first boundary line 203d as opposed to being parallel to it as seen in Figure 5. Said angled relationship between the first 203d and second 209d boundary lines may be particularly useful in guiding foot traffic from a distal location fore of the aircraft 201d, for example from the airport building (not shown), towards the boarding stairs 207d of the aircraft 201d. The arrangement of Figure 6 further illuminates a third boundary line 311d in the shape of an arc. The arc is seen in this Figure with its open ends adjacent the first 203d and second 209d boundary lines. This arc may surround the light source (not shown) and therefore adequately outline its location when in a low light environment. This may provide ease of location for aircraft personnel and prevent the light source being a trip hazard. In another embodiment, the orientation of this illumination arrangement may be reversed so as to guide traffic from an aft point in reference to the aircraft 201d towards the boarding stairs 207d.

Also noted from this arrangement, and although not seen in the embodiments of Figure 2-6, the method of Figure 1 may comprise of the light source illuminating the boundary lines in either straight or curved lines. As such, a more complicated illumination arrangement may be formed that combines straight and curved projected lines to follow the shape of the aircraft architecture. This may employ a plurality of light sources.

Figure 7 provides an illumination arrangement, similar to that of the dual boundary line defined passageway of Figure 5, but instead utilising the curved boundary lines so as to divert traffic from a location aft of an aircraft 201e towards the boarding stairs 207e. This aft location may be a location where a bus 313e stops to drop or pick-up air passengers. The first 203e and second 209e boundary lines seen in Figure 7 are substantially (but may be entirely) parallel curved lines to one another that avoid the main architectural points of the aircraft 201e, such as the wing and engine 205e, and provide a guided passageway to the boarding stairs 207e. The light source in this illumination arrangement may once again be placed on ground at preferably locations denoted as C and D in the description of Figure 3. The light sources employed to achieve these curved boundary lines may comprise a curved head/ filament. The light source may be positioned, and the curve may be oriented, such that the passengers are guided to be a distance from the engine and/or wing at all times. This may be 42m.

Figure 7b show an alternative embodiment. In any embodiment of the portable lighting device the portable lighting device 220 may be positioned under the aeroplane wing, such as for example under the tip of the aeroplane wing. In this specific embodiment the portable lighting device is a portable lighting device that comprises an illuminating rope, belt or ribbon. It is noted that a projecting element may also be used in conjunction (although this is not shown in this specific embodiment). In this embodiment the illuminating rope, belt or ribbon 222 extends from the portable lighting device. This defines a risk zone and a safe zone. Tow illuminating ropes may together create a safe pathway. In this embodiment the illuminating rope extends in both directions, but only one direction is needed. In this embodiment the illuminating rope may be positioned so as ot have a vertex within its path. This may be created in any suitable manner such as a spacer pole being used to induce such a vertex. These vertex' are not essential. The illuminating rope may terminate in a connector such as a male/female connector. In this manner multiple illuminating ropes may be connected together. This may also connect multiple portable lighting devices together.

The details of the light source and its accommodating apparatus credited with producing the above illumination arrangements of Figures 2-7b are described herein. Said apparatus relates to a portable projector of which a first embodiment is seen in Figure 8.

Figure 8 shows portable projector 800 for illuminating boundaries for defining safe zones in an aviation environment, wherein the portable projector comprises; a first light source 801; wherein the first light source is configured to illuminate a first boundary line 203 on that ground, wherein the first boundary line 203 is configured to delineate the boundary between a safe zone and a risk zone in the aviation environment.

The embodiment of the portable projector 800 seen in Figure 8 also comprises a second 803 and third 805 light source. This embodiment of the portable projector 800 is one that is specifically employed to illuminate the arrangement seen in Figure 6 (comprising of the three boundary lines). Each light source seen may illuminate a single boundary line.

Other embodiments of the portable projector 800 may simply comprise a single light source if opting to illuminate more simple illumination arrangements, such as that of Figure 2. An illumination arrangement such as that of Figures 5 and 7 may rely on a portable projector with two light sources as a result.

Structural features of the portable projector include a projector body 807 and a stand portion 809. In some embodiments, the projector body 807 may comprise an internal cavity (not shown) for the storing of any circuitry related to the light sources. This includes any batteries required by the light sources. For applications requiring a controller to implement the illumination of the light sources, this may be stored here too. The projector body 807, and its internal cavity, may also be configured to store the first 801, second 803 or third 805 light sources when not in use.

The stand portion 809 is seen to be attached onto the projector body 807 in Figure 8. Also seen are the light sources that are attached onto the stand portion 809. This arrangement elevates the light sources to a height of 900mm above ground. Other suitable distances such as from 500mm to 1500mm could be used. Other embodiments may elevate the light sources to a different amount by placing them at different heights on the stand portion 809. This elevation allows the light sources to project boundary lines onto the ground with a high degree definition and allows the projection of boundary lines at a greater distance away from the immediate vicinity of the light sources than if the light sources were closer to the ground. Depending on terrain and the range of illumination required, the light source height may be adjusted. Light sources can thus placed at unique heights on the stand portion to give the optimal range and projection definition in line with light environments, terrain and range of safe/risk zones. In the embodiment seen, the projector body 807 is made from die cast aluminium and the stand portion is made from a plastic or other polymer. Other embodiments may employ other materials that are light enough to be transported/manoeuvred and robust enough to protect the internal cavity of the project body. The stand portion may further act as a handle portion to allow the person manoeuvring the portable projector a more comfortable height to do so (as opposed to bending down).

Additional structural means of the portable projector may comprise a harnessing means (not shown). This harnessing means may allow for the suspension of the portable projector 800 from locations such as airport buildings or hangers or even a portion of the aircraft (such as above the door) as described in Figure 3. Such harnessing means may simply be a fabric and hook arrangement that constrains the portable projector at multiple locations on the projector body, or it may be a more constrained mechanical arrangement, for example, an anchor point that the portable projector slots into or is housed within.

To enable the on ground manoeuvring capabilities of the portable projector, the portable projector further comprise a propulsion means. Said propulsion means taking form of wheels 901 that are attached onto the projector body (or an axle accommodated within the projector body). The embodiment of Figure 8 comprise two of said wheels 901 positioned towards a rear end of the projector body 807. The propulsion arrangement allows the portable projector 800 to be manoeuvred into the precise location intended to place a boundary line on. This may accurately delineate the safe and risk zones in a manner that maximises the area for the safe zone or defining an explicit parallel passageway that is uniform and neatly leads towards the boarding stairs of the aircraft.

In alternative embodiments, the propulsion means may be rollers or a sled, belt or track type arrangement (not shown).

The light sources in the embodiment seen in Figure 7 are projectors configured to emit LED lights. Alternative embodiments may employ lasers or other forms of light sources capable of emitting a beam that projects a distinct project on the ground.

The positions of the light sources on the portable projector (i.e. atop the stand portion) depends on the illumination arrangement desired in each application. For example, to achieve the illumination arrangement of Figure 2, only one light source may be utilised to project the single boundary line. This light source may be placed at any location on the stand portion and the portable projector oriented to project the boundary line in the intended location as described above.

The arrangement of Figure 4 may also use either a single light source arrangement and rely on the bleeding of light into the safe zone from the boundary line. Alternatively, this arrangement may also utilise a dual light source arrangement to illuminate the safe zone area separately to the boundary line. This safe zone illumination may be less distinct than the illumination of the boundary line and more volumetric in its nature such as a spotlight (not shown).

The illumination arrangement of Figure 5 may utilize two light sources. Irrespective of where they are placed on the portable projector 800 they shall be angled to face the same (forward) direction to illuminate the passageway (as each light source contributes to each boundary line of the passageway). The parallel nature of the passageway here depending on the consistency in orienting the lights in the same direction. The illumination arrangement of Figure 7 may utilise a similar configuration.

The illumination arrangement of Figure 6 may have a portable projector 800 set up as seen in the embodiment of Figure 8 with first 801 and second 803 light sources placed on first and second sides of the portable projector (opposite sides) and facing first and second directions. The result of this is that the first and second light sources illuminate first and second boundary lines on each side of the portable projector 800. The heads of the light sources are also oriented so as to project boundary lines that diverge from one another.

In the illumination arrangement of Figure 6, the first boundary line created from this arrangement extends towards the boarding stairs whilst the second boundary line extends to a point in front of the aircraft (such as an airport building or hanger). As such, this arrangement may be particularly suited to guiding passengers to board and exit aircrafts in most aviation settings. Figure 7 shows a similar affect (seen to guide passengers form a location aft of the aircraft but may also be reverse to do so from a location fore of it).

Also seen in the illumination arrangement of Figure 6 is a third boundary line in the shape of an arc. This third boundary line is a feature resultant from a third light source placed orthogonally to the first and second light sources and facing a third direction. The purpose of this third boundary line is to illuminate the exact location of the portable projector. The benefits of doing so aid not only the air passengers in avoiding the portable projector (and hence it not becoming a trip hazard) but also the airport personnel in locating the portable projector for adjustment or removal in low light level environments. The head of the third light source may be curved to achieve this arc shape.

Figure 9 shows a second embodiment of the portable projector to Figure 8. Said embodiment does not have an internal cavity within the portable projector 903 and may be particularly employed to illuminate an arrangement with three boundary lines.

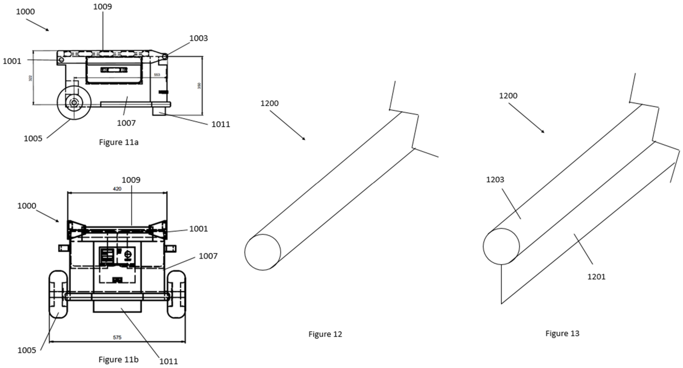

Figures 10 and 11 show a third embodiment of a portable projector 1000. This third embodiment represents a collapsible portable projector configured to be compact and aid storage feasibility. Figures 10a and 10b show the portable projector 1000 in the non-collapsed configuration. Figures 10a and 10b show the portable projector without any light sources present or attached to it. However, this third embodiment of the portable projector 1000 may comprise any number of light sources (not shown) as described above and in the configurations described above i.e. first, second and third light sources located orthogonally to one another or otherwise. For embodiments comprising first and second light sources positioned upon this third embodiment of the portable projector, the first light source may be positioned atop the stand portion 1009 on a first side, and the second light source may be positioned atop the stand portion 1009 on a second side. Alternatively, they may be positioned any height on the stand portion 1009. Said light sources may be stored in the internal cavity (not shown) of the portable projector body 1007 when not in use. This internal cavity may further be configured to store a third light source (if implemented) when not in use along with any circuitry (not shown) or batteries (not shown) required for the light sources. The third light source may be positioned in between the first and second light sources when in use.

The stand portion 1009 is attached to the projector body 1007 via a pivoting, or hinged, attachment 1001 in order to enable a first non-collapsed, or extended, configuration seen in Figures 10a and 10b and a second collapsed and storable configuration seen in Figures 11a and 11b. In this embodiment, this attachment is a barrel joint but in other embodiments it may be of another form.

As is consistent with the first and second embodiments of the portable projectors, the third embodiment of the portable projector 1000 comprises a handle portion 1003 at the top of the stand portion 1009 and a propulsion means 1005 in the form of a single pair of wheels. In other embodiments, the location of the handle portion 1003 may be distinct from the stand portion 1009, for example, the handle portion may be an independent feature in and of itself (not attached to the stand portion 1009). Equally, the propulsion means 1005 may be located at a different location to that seen in Figures 10 and 11, i.e. placed at a location not aft of the projector body 1007. Also seen in the third embodiment of the portable projector 1000 is an anchor stand 1011 located underneath and fore on the projector body 1007. Here, the anchor stand 1011 enables contact with the ground to maintain level and horizontal orientation of the portable projector 1000 with respect to the ground when in use and in storage. As a result of this, manoeuvring this embodiment of the portable projector 1000 may see a user being required to tilt the portable projector (backwards) so that the only contact with the ground are the wheels. The portable projector 1000 may be tilted forward to secure and level the portable projector 1000 when the portable projector 1000 has been positioned in the correct place. In other embodiments, the portable projector 1000 may further comprise a second pair of wheels (not shown) located for on the portable projector 1000. Said embodiments may not require a stand anchor 1011 and may be manoeuvred in a single plane (without tilting). The wheels, or any other propulsion means utilised by the portable projector may be detachably attached to the portable body 1007 for all embodiments of the portable projectors as described above. The wheels, or other propulsion means (1005), may be stored in the cavity. The detachable nature of the wheels, and the space minimising arrangement of the stand in the collapsed configuration minimise the space taken up by the portable projector. This may allow efficient packaging of the device for example when transporting the device by plane to an airport.

Although not seen in Figures 10a and 10b, the third embodiment of the portable projector may further comprise a spool element. This may also be the case for the first and second embodiments of the portable projector. Said spool element may enable the accommodation of an illuminated rope (as will be described below).

Figures 11a and 11b show the third embodiment of the portable projector 1000 in a collapsed configuration. The stand portion 1009, as hingedly attached onto the projector body is configured to lie parallel to a top surface of the projector body 1007 and atop it. In other embodiments, this stand portion 1009 may be detachable entirely from the projector body 1007 and may be stored within the internal cavity (not shown) of the portable projector.

It is noted that in some embodiments a task light is present on the portable projector.

In some embodiments the portable projector comprises a light sensor. The light sensor is configured to determine when the ambient light source below a pre-determined level. This level may approximate the level of light at dusk, for example 400 lumens, 250 lumens, 100 lumens or 50 lumens. Below this light level the light sensor (possibly via a controller or other element) is configured to cause the portable projector to emit light. For example, in embodiments comprising a projector the projector is configured to project light onto the floor. In embodiments comprising a light rope the illuminating rope is configured to illuminate. In embodiments with both the projector and the illuminating rope both may be configured to emit light. In embodiments in which the projector is used at airports it may be particularly advantageous to prevent such automatic switch on of lights from being directed at pilots or other workers in or around the airport. For this reason, the projector may be configured to prevent the projector from shining above the ground. The projector may be fixed in position. For example, where arms are used to house one or more projecting elements the arms may be fixed in place. In some embodiments the arms may allow 5 to 10 degrees of angular movement.

Figure 12 shows a perspective view of the illuminating rope 1200. This illuminating rope 1200 provides a means to execute the methodology 100 of Figure 1 by way of a second implementation. As mentioned this second implementation of the methodology 100 may be used independently to the above described illumination arrangement as executed by the portable projectors or it may be used in conjunction with them.

Not seen in figure 12 are the internally held light emitting elements that enable the rope to be illuminated. A single light emitting element may be present within the illuminating rope, said light emitting element may span the length of the illuminating rope and be centrally placed within it. Alternatively, there may be a chain of light emitting elements arranged longitudinally within the illuminating rope. For the single light emitting element arrangement, the light emitting element may be itself of a flexible nature in order to enable the illuminating rope to also be flexible and capable of being wound up (when not in use). In the chained arrangement, the spaces between the light emitting elements may enable flexibility for the same purpose. In practice, the illuminating rope 1200 may be wound up and stored in a compact arrangement and deployed as and when needed. Also in use, the flexibility of the illuminating rope 1200 may enable precise placement and positioning to accurately delineate a safe or risk zone. In low light environments, the illuminating rope may be used independently of any other light source described above to delineate the first boundary line. Alternatively, it may be used in conjunction with any illumination arrangement shown and described above.

Figure 13 shows the illuminating rope in an embodiment in which it further comprises a flange portion 1201. The flange portion 1201 shown in Figure 13 is aligned with respect to the illuminating rope 1200 such that its plane bisects the cross section of the main cylindrical body 1203 of the illuminating rope 1200 (see Figure 13a). The flange portion 1201 enables a greater surface area for the illuminating rope 1200 and this may aid visibility especially in high light environments when there is a lesser contrast to the surroundings offered by the illumination of the illuminating rope 1200. That being said, it is still possible to implement the embodiment of the illuminating rope 1200 seen in Figure 13 with any illumination arrangement described above. The flange portion 1200 in such scenarios may enable a greater surface to reflect any incident light.

In some embodiments the body of the illuminating rope 1200 may have a diameter of between half a centimetre and 5 centimetres. This may aid with providing visibility during low light settings. However, any larger and the illuminating rope 1200 may be difficult to spool. Indeed, most preferable embodiments have a diameter of less than 2.5 centimetres. The width of the flange may be 5cm or more (up to even 20cm or more). This may provide a very large surface area for the user of an aviation environment and therefore the flange may provide greater visibility in high light settings.

The flange portion 1201 is flexible and configured to either be removed from the main cylindrical body 1203 of the illuminating rope 1200 when not in use or the flange portion 1201 may be integrally attached. In such integral attachment, the flange portion 1201 may be configured to be spooled around the main cylindrical body 1203 of the illuminating rope 1200 before the illuminating rope 1200 is wound up for storage. It may then be un-wound when the illuminating rope 1200 is deployed. For flange portions 1201 detachably attached to the main cylindrical body 1203 of the illuminating rope 1200, this attachment may comprise a zip lock style seal (i.e. a male part slotting in-between a flexible female part or slit).

The winding of the flange portion 1201 around the illuminating rope 1200, or main cylindrical body 1203 of the illuminating rope 1200, is perpendicular to both, the longitudinal extension of the illuminating rope 1200 and the direction of the winding of the illuminating rope 1200 when it is wound around itself for storage. This transverse winding arrangement ensures a compact and convenient to achieve winding and storage arrangement.

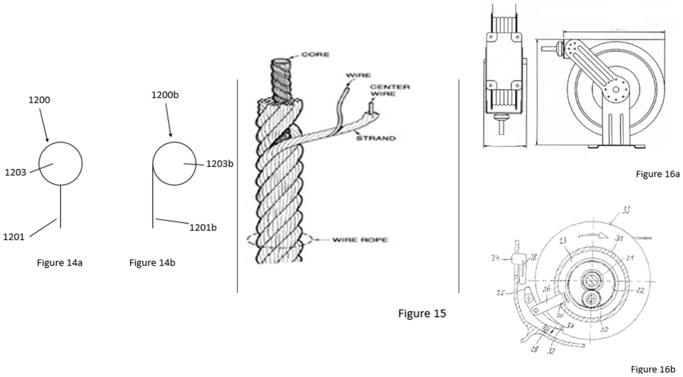

Figure 14a and Figure 14b show two cross sections of separate embodiments 1200, 1200b of the illuminating rope. Figure 14a shows an embodiment consistent with that of Figure 13 in which the flange portion 1201 is centrally connected to the main body of the illuminating rope 1200 (i.e. such that the flange portion's plane bisects the cross section of the main cylindrical body of the illuminating rope). Figure 14b shows an embodiment in which the flange portion 1201b is tangentially connected to the main body of the illuminating rope. Furthermore, the flange portion may be attached at any angle in between these two extreme arrangements. The attachment of the flange portion 1201b onto the main cylindrical body of the illuminating rope is described with consideration to any spatial orientation of the cross section of the illuminating rope. For instance, a centrally connected attachment as shown in Figure 14a is a result of a single point of contact (in a 2-dimensional view) between a leading edge of the flange portion 1201 and the main cylindrical body 1203 of the illuminating rope. Whereas, the tangential attachment of Figure 14b is a result of attaching a larger area of the face of the flange portion 1201b onto the main cylindrical body 1203b of the illuminating rope 1200b. Therefore, the latter differs from the former in that the face of the flange portion attaches onto the main cylindrical body of the illuminating rope as opposed to its leading edge. Due to the greater points of contact in the tangential arrangement, this may be a greater attachment mechanism and may further encourage winding around the illuminating rope 1200b as the direction of the winding has been set. Both the abovementioned attachments may be executed by way of an ultrasonic welding process or other. The flange portion 1201, 1201b may be type of plastic. The above embodiments are to be understood as illustrative examples. Further embodiments are also envisaged. It is to be understood that any feature described in relation to any one embodiment may be used alone, or in combination with other features described and may also be used in combination with one or more features of any other of the embodiments, or any combination of any other of the embodiments.

Figure 15 shows an example of the structure of a rope. This comprises one or more helical elements. Optionally, a core element may sit within the helical elements. Optionally the helical elements may themselves be formed of one or more helical sub-elements. In this embodiment one or more of the helical elements (or sub-elements) comprises a light emitting component. This therefore makes the rope visible at night. The ripe may be visually identifiable in the day as well (for example being bright in colour) so that the illuminating rope offers a 24 hour solution. Moreover, the helical rope may be relatively simple to stow or store when not in use, whilst minimising space. The rope may be 2cm to 10cm in diameter.

Furthermore, equivalents and modifications not described above may also be employed without departing from the scope of the invention, which is defined in the accompanying claims.

Figure 16a shows one embodiment of a "hose-type" reel for storing the illuminating rope during periods of non-use. This is shown in both side view and front view. This may be mounted on the portable projector such as on the base of the portable projector, on the upright, or on an additional arm arrangement. Any suitable reel may be used. Figure 16a is merely an exemplary illustration of a "water hose" type reel synonymous with garden hoses and the like. This comprises a central axis on which an object may be wound. The object being wound may have a large thickness and may be any shape, including but not limited ot being tubular. This may be particularly well suited to the helical rope embodiment described above. Ther is no biasing in this specific example.

Figure 16b shows one embodiment of a "ribbon-type" reel for storing the illuminating rope during periods of non-use. This is shown in cross-sectional view. This may be mounted on the portable projector such as on the base of the portable projector, on the upright, or on an additional arm arrangement. This is an exemplary embodiment and relates to an "extendable dog lead" type embodiment. In this embodiment the illuminating belt or ribbon (or rope) is wound internally around a central axis. Whilst n this embodiment the device may be biased such that when the illuminating belt is disconnected it is biased towards being within the reel, in other embodiments this may not be the case. Such embodiments of reel may be well suited to belt type devices and may be very space efficient.

It is noted that the reels may be mounted on the portable lighting device descrbed above. For example, the reels may be mounted on top of the stand in a preferable embodiment, but may in other embodiment be mounted on the stand, or body of the lighting device more generally.

Figure 17a shows a cross-sectional view of a further embodiment of an illuminating rope in a ribbon type embodiment with an illuminating element attached to a ribbon/rope element. This shows an illuminating element attached to the illuminating rope, belt or ribbon (in this case belt). The belt itself may be any suitable construction, again in this case nylon, and in this case 45mm in width (alternative widths of 25mm, 35m or 55mm may in particular be used). The illuminating element or lighting device may be located centrally or at any position along the width of the belt. The lighting device may consist of one or more LES that are either apart or connected together to form a line of connected LEDs. These may comprise a continuously illuminated line, or a line comprising a series of discretely illuminated sections. Any suitable cross-sectional shape may be used. The lighting device may be attached to the belt in any suitable way such as adhesive, ultrasonic welding, or the like.

Figure 17b shows a cross-sectional view of a further embodiment of an illuminating rope in a ribbon type embodiment with an illuminating element attached to a ribbon/rope element. Affixed to the illuminating rope is a covering sheet. It is noted that the covering sheet may be an extension of the belt itself such that it is folded over onto itself. Alternatively, the covering sheet may be an entirely separate sheet and may even be formed of different material. The covering sheet may be transparent, or in most embodiments translucent. The covering portion may be sewn to attach it to the belt. Alternatively, the belt and covering portion may be welded together, or adhered together. Where the covering portion is an extension of the belt in some embodiments no connection may be required, or n other embodiments a connection with the lighting element may be sufficient.

Figure 17c shows a cross-sectional view of a further embodiment of an illuminating rope in a ribbon type embodiment with an illuminating element attached to a ribbon/rope element. Affixed to the illuminating rope is a covering sheet, or alternatively a portion of the ribbon may fold over the illuminating element. This is similar to Figure 17b, except that the illuminating element is positioned at the top of the belt and the covering portion only extends along a short portion of the belt. This may be particularly well suited to the extension of the belt embodiment. As shown in this embodiment such an extension would in most embodiments be attached to the belt below the position of the illuminating element. In all embodiments the illuminating element is sandwiched between the covering portion and the belt.

Figure 17d shows a cross-sectional view of a further embodiment of an illuminating rope in a ribbon type embodiment with an illuminating element attached to a ribbon/rope element. Affixed to the illuminating rope is a covering sheet, or alternatively a portion of the ribbon may fold over the illuminating element. This is the same as Figure 17c with the exception that the illuminating element is positioned at the bottom of the belt.

Figure 18a shows a plan view of a non-covered embodiment of a ribbon type embodiment in which the illuminating elements are in the form of an illuminating strip. In this embodiment the illuminating elements are spaced tightly together. The LEDs may be 1cm or less from one another in this particular example. This may increase illumination, but also increase cost. In some embodiments the appearance of the strip may be that a continuous illumination across the length of the strip is shown without discrete individual LEDs being identifiable. The colour may be any suitable colour.

Figure 18b shows a plan view of a non-covered embodiment of a ribbon type embodiment in which the illuminating elements are in the form of an illuminating strip. In this embodiment the illuminating elements are spaced sparsely such that they are apart from one another. In this example the LEDs may be 2cm or more from one another. The LEDs themselves may be larger to maintain the same total illumination, or may be the same size in order to simply save on cost.

In emboments comprising a strip the LEDs may all be on at once. Alternatively thy may be programmed to come on at alternating times. This may create an on/off effect, or an effect in which the light creates a "wave" and appears to travel down the belt. This may assist in users taking note of the rope.

Figure 18c shows a plan view of a non-covered embodiment of a ribbon type embodiment in which the illuminating elements are independent of one another. In this embodiment the illuminating elements are spaced sparsely such that they are apart from one another. This embodiment is to illustrate that illuminating strips are not essential. In some embodiments individual LEDs or the like may be adhered to the belt individually and not be connected together. They may have any suitable distance apart. It is noted this is expected to significantly increase labour required in manufacture and so is unlikely to be the preferred embodiment.

Figure 18d shows a plan view of a covered embodiment of a ribbon type embodiment in which the covering element is visible. It is noted that any of the previous embodiment may be situated under a covering portion as shown. The covering portion may be any suitable construction, such as for example those shown and explained with reference to Figure 17.

In some examples, one or more memory elements can store data and/or program instructions used to perform the methods described herein. This may particularly relate to a processor used to determine the steps to be performed, and when each step has been completed. Embodiments of the disclosure provide tangible, non-transitory storage media comprising program instructions operable to program a processor to said method.

The processor/controller of such method of use (and any of the methods, activities or instructions outlined herein) may be implemented with fixed logic such as assemblies of logic gates or programmable logic such as software and/or computer program instructions executed by a processor. Other kinds of programmable logic include programmable processors, programmable digital logic (e.g. a field programmable gate array (FPGA), an erasable programmable read only memory (EPROM), an electrically erasable programmable read only memory (EEPROM), an application specific integrated circuit (ASIC) or any other kind of digital logic, software, code, electronic instructions, flash memory, optical disks, CD-ROMs, DVD ROMs, magnetic or optical cards, other types of machine-readable mediums suitable for storing electronic instructions, or any suitable combination thereof.

## Claims

1. A method of illuminating one or more boundaries for defining a safe zone in the vicinity of an aviation environment, wherein the method comprises the steps of:
placing a light source adjacent to the aviation environment;
illuminating a first boundary line that delineates the boundary between a safe zone and a risk zone adjacent the aviation environment.

2. The method of claim 1, wherein the method comprises illuminating the first boundary line with an illuminating rope, optionally
wherein the illuminating rope comprises a flange portion, wherein the method further comprises delineating the first boundary line at least partially by the flange portion.

3. The method of any preceding claim, wherein the light source is placed such that it is positioned to illuminate a portion of the ground adjacent the aviation environment, and wherein the first boundary line is a distinct projection on the ground, optionally wherein the method further comprises a portable projector illuminating the distinct projection on the ground, optionally, when dependant on claim 2, wherein the method further further comprises both the illuminating rope and the portable projector illuminating the first boundary line together; and/or
wherein the method is for defining a safe zone for air passengers boarding and/or exiting an aircraft, and wherein the aviation environment is an area adjacent an aircraft, optionally
wherein the risk zone is a region adjacent a first engine of the aircraft, further optionally
wherein the risk zone is a region fore of the first engine of the aircraft, further further optionally
wherein the risk zone is aft of the first engine of the aircraft; optionally and/or
wherein the method comprises the step of illuminating the first boundary line with a maximal intensity, and wherein the method comprises the step of illuminating the safe zone and the risk zone with a minimal intensity, wherein the difference between the maximal and minimal intensities projects a geometrically distinct line on the ground; or
wherein the method comprises the step of illuminating the first boundary line and the safe zone with a maximal intensity and wherein the method comprises the step of illuminating the risk zone with a minimal intensity, wherein the difference between the maximal and minimal intensities projects a geometrically distinct passage on the ground, wherein the illumination of the safe zone and the first boundary line is continuous, optionally
wherein the maximal intensity comprises a spectrum of illumination intensities, further optionally
wherein the strength of illumination of the maximal intensity is at least 800 lumen and is preferably at least 1000 lumen, optionally wherein it is maximal strength of illumination is at least 800 lumen and preferably 1000 lumen or more.

4. The method of any preceding claim, further comprising illuminating when a light sensor determines the ambient light is less than a pre-determined safety level, wherein said level approximates to the normal light level at dusk, for example around 400 lumens, or 250 lumens, or 100 lumens or 50 lumens; optionally wherein the illuminating when the light sensor determines the ambient light is less than the pre-determined safety level comprises projecting the light on to the ground; optionally wherein the illuminating when the light sensor determines the ambient light is less than the pre-determined safety level comprises illuminating an illuminating rope, ribbon or belt; optionally wherein when the light sensor determines the ambient light is less than the pre-determined safety level preventing the light projector from being angled towards the sky, or otherwise away from the ground; and/or
wherein the method comprises illuminating the first boundary line with 60-80% percent of the maximum power of the light source and preferably with 70%, optionally, wherein the method comprises the step of illuminating the safe zone with less than 5% percent of the maximum power of the light source; and/or
wherein the method comprises illuminating the risk zone with less than five percent of the power emitted from the light source, optionally the method comprises illuminating the risk zone with less than 1 percent of the power emitted from the light source, further optionally wherein the method comprises illuminating the safe zone with less than five percent of the power emitted from the light source, and optionally less than 1 percent.

5. The method of any preceding claim, wherein the method comprises illuminating a second boundary line, wherein the second boundary line is a distinct projection on the ground, wherein the second boundary line forms a passageway together with the illuminated first boundary line, optionally wherein this illuminated passageway defines a walkway that directs air passengers towards or away from the aircraft, optionally, either
wherein the second boundary line is parallel to the first boundary line; or
wherein the second boundary line diverges from the first boundary line; and/or
wherein the method further comprises illuminating a third boundary line on the ground, wherein the third boundary line is a distinct projection on the ground, wherein the third boundary line is illuminated in the shape of an arc, optionally wherein the open end of the arc is adjacent the first and second boundary lines.

6. The method of any preceding claim, wherein the method comprises illuminating the first boundary line in straight lines, optionally wherein the method comprises illuminating the second boundary line in straight lines; or
wherein the method comprises illuminating the first boundary line in curved lines, optionally wherein the method comprises illuminating the second boundary line in curved lines; or
wherein the method comprises illuminating the first boundary line with both straight and curved lines, wherein this combination of straight and curved lines follows the architecture of an aircraft; and/or
wherein the method comprises the step of placing the light source in front of an aircraft; or
wherein the method comprises the step of placing the light source above an aircraft; or
wherein the method comprises the step of placing the light source at ground level; or
wherein the method comprises the step of placing the light source on an aircraft; and/or
wherein the method comprises the step of illuminating the ground with a range of illumination of 15-30m, and most preferably from 20-25m.

7. The method of any preceding claim, wherein the method comprises the step of illuminating with an illuminating rope, belt or ribbon; and/or
wherein the method comprises the step of illuminating with a projector, optionally wherein the projector emits light from a LED light source, such as an LED chip, optionally wherein the projector emits light from a laser light source; and/or
wherein the method comprises the step of illuminating with a portable light source, optionally
wherein the method of placing the portable light source to illuminate the first boundary line comprises the step of transporting/adjusting the light source on wheels; and/or
wherein the first boundary line extends from a portion of the ground adjacent the boarding stairs leading to an aircraft to a region of the ground away from the risk zone; and/or
wherein the method further comprises illuminating a portion of the boarding stairs of an aircraft; and/or
wherein the method comprises illuminating a first risk zone in the vicinity of the engine that is affected by the heat of the engines; optionally
wherein the first boundary line is spaced from an aircraft engine by at least 20m dependent on the aircraft; and/or
wherein higher risk zones are illuminated more intensely and lower risk zones are illuminated less intensely.

8. A portable lighting device for illuminating boundaries for defining safe zones in an aviation environment, wherein the portable lighting device comprises;
a first light source;
wherein the first light source is configured to illuminate a first boundary line on that ground, wherein the first boundary line is configured to delineate the boundary between a safe zone and a risk zone in the aviation environment.

9. The portable lighting device of claim 8, wherein the portable lighting device is for defining a safe zone for air passengers boarding and/or exiting an aircraft, and wherein the aviation environment is an area adjacent an aircraft; and/or
wherein the portable lighting device further comprises a propulsion means;
wherein the propulsions means is configured to align the first light emitting portion such that it is positioned to illuminate the first boundary line; and/or
wherein the portable lighting device further comprises a second light source wherein the second light source is configured to illuminate a second boundary line on the ground; optionally
wherein the first and second boundary lines are parallel, optionally wherein a passageway is formed in between the first and second boundary lines for aircraft passengers; or
wherein the first and second boundary lines are straight lines that diverge from one another; and/or wherein portable lighting device comprises a third light source, wherein the third light source is configured to illuminate a third boundary line on the ground, optionally
wherein the third light source faces a third direction, wherein the third direction is orthogonal to the first and second directions such that the third boundary line is adjacent a third side of the portable lighting device, optionally
wherein the third boundary line is an arc shape, optionally wherein the open end of the arc faces and is adjacent the first and second boundary lines.

10. The portable lighting device of any of claims 8-9, wherein the portable lighting device comprises a light sensor configured to determine the ambient level of light in the local vicinity; optionally wherein the light sensor is configured to cause the portable projector to illuminate when the ambient light source drops below a pre-set level, for example the ambient light level at dusk, for example below 400 lumens, 250 lumens, 100 lumens or 50 lumens; optionally wherein the portable projector is configured to project light below this level, and/or wherein the portable projector is configured to illuminate an illuminating rope, ribbon or belt below this ambient level of light; optionally wherein the portable lighting device is configured to prevent the lighting device from being angled above the ground once the light sensor determines a level of light below the threshold, optionally, wherein the projector comprises one or more arms housing the projecting element; optionally wherein the arms are fixed in position once ambient light below the predetermined level is detected, optionally, wherein fixed comprises an angular movement of up to 5 degrees or up to 10 degrees, wherein only allowing up to 10 degrees of angular movement of the projector, or optionally only 5 degrees of angular movement of the projector member; and/or
wherein the portable projector further comprises a stand portion, optionally wherein the stand portion is a handle portion configured to be held by an operator for transporting/positioning the portable projector, optionally wherein the first light source is positioned atop the stand portion, optionally, when dependant on claim 9, wherein the second light source is positioned atop the stand portion, optionally wherein first and second light sources are configured to face first and second directions respectively such that the first boundary line is illuminated adjacent a first side of the portable lighting device, and wherein the second boundary line is illuminated adjacent a second side of the portable lighting device, optionally wherein the first and second light sources face opposite directions to one another; and/or
wherein the portable lighting device comprise a projector body, optionally
wherein the propulsion means are attached to the projector body, optionally
wherein the stand portion is attached to the projector body, optionally wherein the stand portion is pivotably attached to the projector body, optionally,
wherein in the stand portion is configured to be pivotable between a first non-collapsed configuration and a second collapsed configuration with respect to the projector body, wherein the non-collapsed configuration is an illuminating configuration for the portable lighting device and wherein the collapsed configuration is a storage configuration for the portable lighting device, optionally
wherein the projector body is configured to store one or more batteries used to operate the first light source, optionally
wherein the projector body is configured to store the first light source when not in use, optionally, wherein the projector body is configured to store the second light source, further optionally the third light source; and/or
wherein the stand portion is made from a plastic or other polymer or equivalent suitable material that can withstand heat and cold conditions; and/or
wherein the projector body is made from aluminium such as diecast aluminium, and/or
wherein the propulsion means are wheels.

11. The portable lighting device of any of claims 8 to 10, wherein the first light source is a first projector, optionally wherein the second light source is a second projector, further optionally, when dependant on claim 15, wherein the third light source is a third projector; or alternatively wherein at least one of the first, second or third light sources is an illuminating rope, ribbon or belt, optionally wherein the illuminating rope, ribbon or belt is the illuminating rope, ribbon or belt of claims 1 to 7; and/or
wherein the portable projector comprises a controller, optionally wherein the controller is configured to communicate with the first projector, optionally the second projector, optionally, the third projection, optionally wherein the controller is stored in the projector body; and/or
wherein the portable projector is configured to emit LED light; and/or
wherein the projector is configured to emit lasers; and/or
wherein the portable projector comprises a harnessing means, wherein the harnessing means is configured to attach onto a component of the aircraft.
Wherein when the portable lighting device further comprises one or more reels to store the illuminating rope, ribbon or belt, when the illuminating rope, ribbon or belt is not in use.

12. An illuminating rope, ribbon or belt for illuminating boundaries for defining safe zones, wherein the illuminating rope, ribbon or belt comprises:
one or more light emitting elements, wherein the one or more light emitting elements are configured to illuminate at least a portion of the length of the illuminating rope, ribbon or belt.

13. The illuminating rope, ribbon or belt, of claim 12, wherein the illuminating rope, ribbon or belt comprises a planar shape, optionally wherein the illuminating belt comprises a covering portion configured to cover the one or more light emitting elements, such that the one or more light emitting elements are housed between the illuminating rope, ribbon or belt and the covering portion, optionally wherein the covering portion is stitched, adhered, or heat sealed to the illuminating rope, ribbon or belt optionally wherein the illuminating belt further comprises a flange portion, wherein the flange portion extends a portion of the longitudinal length of the illuminating rope, ribbon or belt, optionally
wherein the flange portion is flexible, optionally wherein the flange portion is configured to be at least partially wound around the illuminating rope, optionally wherein the illuminating rope is flexible, further optionally wherein the illuminating rope is configured to be wound, optionally wherein the winding of the flanged portion around the illuminating rope is perpendicular to the winding of the illuminating rope around itself or a spool.

14. The illuminating rope, ribbon or belt, of any of claims 12-13, wherein the illuminating rope is substantially tubular, and optionally further comprises a main cylindrical body, optionally wherein the main cylindrical body is substantially tubular; and/or
wherein the illuminating rope, ribbon or belt comprises one or more helically wound elongate members, wherein one or more of said members comprises a light emitting element; optionally wherein said one or more helically wound members are wound around a core; optionally wherein the helically wound members enable the illuminating rope, ribbon or belt, to wound as per a normal rope; and/or
wherein the flange portion is located such that the flange portion's plane bisects the cross section of the main cylindrical body of the illuminating rope, ribbon or belt, or wherein the flange portion is attached tangentially with respect to the cross section of the main cylindrical body of the illuminating means; and/or
wherein the illuminating rope, ribbon or belt, further comprising an attachment mechanism to connect to a second illuminating rope, ribbon or belt, wherein the attachment mechanism comprises a male/female connector such as a hook portion; and/or
wherein the illuminating rope, ribbon or belt comprises nylon, and/or wherein it is 50mm-100mm in with, optionally 75mm in width, and wherein the illuminating rope, ribbon or belt is 10m to 50m in length, optionally 15m, 25m, 35m or 45m in length.

15. A kit of parts comprising one of;
i) an aircraft;
a portable lighting device; and
an airport; optionally wherein the portable lighting device is the portable projector of claims 8-11; and/or ii) an aircraft;
an illuminating rope, ribbon or belt; and
an airport; optionally wherein the illuminating rope, ribbon or belt, is the illuminating rope of claims 12-14.
